(19) **Europäisches Patentamt / European Patent Office / Office européen des brevets**

(11) **EP 1 869 875 B1**

(12) **EUROPEAN PATENT SPECIFICATION**

(45) Date of publication and mention
of the grant of the patent:
**16.05.2012 Bulletin 2012/20**

(21) Application number: **06727771.5**

(22) Date of filing: **30.03.2006**

(51) Int Cl.:
*H04N 1/62* (2006.01)    *H04N 9/68* (2006.01)

(86) International application number:
**PCT/IB2006/050963**

(87) International publication number:
**WO 2006/106453 (12.10.2006 Gazette 2006/41)**

(54) **COLOR CONVERSION UNIT FOR REDUCED FRINGING**

FARBUMWANDLUNGSEINHEIT ZUR VERRINGERUNG DES FARBSAUMS

UNITE DE CONVERSION DE COULEUR PERMETTANT DE REDUIRE LE FRANGEAGE DE COULEUR

(84) Designated Contracting States:
**AT BE BG CH CY CZ DE DK EE ES FI FR GB GR HU IE IS IT LI LT LU LV MC NL PL PT RO SE SI SK TR**

(30) Priority: **04.04.2005 EP 05102635**

(43) Date of publication of application:
**26.12.2007 Bulletin 2007/52**

(73) Proprietor: **Koninklijke Philips Electronics N.V.**
**5621 BA Eindhoven (NL)**

(72) Inventors:
• **HEKSTRA, Gerben, J.**
**NL-5656 AA Eindhoven (NL)**

• **SCHMEITZ, Harold, A., W.**
**NL-5656 AA Eindhoven (NL)**
• **LANGENDIJK, Erno, H., A.**
**NL-5656 AA Eindhoven (NL)**
• **MERTENS, Mark, J., W.**
**NL-5656 AA Eindhoven (NL)**

(74) Representative: **Groenendaal, Antonius W. M.**
**Philips**
**Intellectual Property & Standards**
**P.O. Box 220**
**5600 AE Eindhoven (NL)**

(56) References cited:
**EP-A- 0 700 215**    **US-A- 4 553 157**
**US-A1- 2003 043 394**    **US-A1- 2004 100 589**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The invention relates to a conversion unit for processing an input video signal to yield an output video signal manifesting less color break-up when displayed on a temporal color display than the input video signal.

The invention also relates to temporal color display comprising such a conversion unit.

The invention also relates to a method of processing an input video signal to yield an output video signal manifesting less color break-up when displayed on a temporal color display than the input video signal.

The invention also relates to a computer program product comprising code for the method.

The invention also relates to a specially adapted electronic picture representation for use in the method or the conversion unit. With picture representation is meant something equivalent to picture signals mathematically specifying a physical, e.g. an ordered set of integer tuple pixel values, e.g. a standardized television signal such as a PAL or MPEG video signal.

Temporal color displays are displays which produce a color pixel by successively in time illuminating the pixel's position with differently colored light. E.g., in a particular front projector, a controllable mirror element of a digital micro-mirror device (DMD) is first illuminated by a red illumination (e.g. obtained by filtering a white-colored HMP lamp with a red filter in a color wheel), then with a green, and then with a blue illumination. By controlling the amount of this red (R), green (G) and blue (B) illumination impinging upon the mirror which is reflected towards the imaging system - i.e. the lens etc. which finally produces a picture pixel in a particular position on a screen- instead of being discarded, any color within a triangle can be reproduced. The elementary colors by combination of which required picture colors are reproduced are called color primaries, and in most current systems there are three such primaries, although novel displays are currently under development having more primaries (so-called "multi-primary" displays).

A disadvantage of such temporal color displays occurs (even for stationary pictures) when there is a relative motion between the eye and the displayed picture. The color reproduction only works correctly if all primary color components (R,G,B,X, ...) are imaged in the same position of the retina.

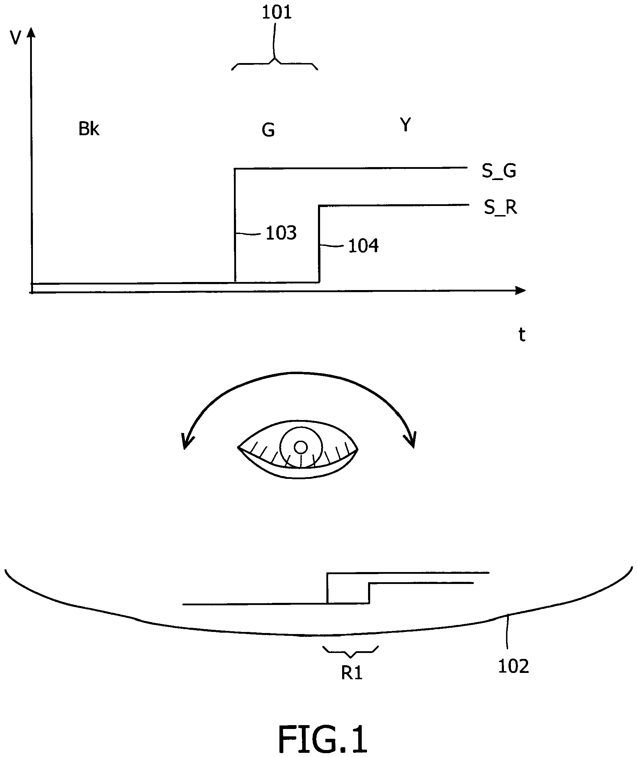

If this is not true because the eye has relatively moved by the time a next color component is being imaged, so called color break-up otherwise known as fringing occurs (seen as a rainbow of saturated primary colors), as is explained below in detail with the aid of Fig. 1.

This is at least to a part of the viewers annoying to extremely annoying.

The current teaching is that to alleviate those problems, the frequency of presentation of the primary color component pictures has to be increased, from e.g. 3*60 per second to e.g. 3*2*60/sec. Indeed, if the frequency is high enough, the slow eye cannot move enough in a time frame displaying all components at least once.

However, in practice, the required frequency has to be high, which is not desirable in view of the increased cost (e.g. to perfectly image all frames a "natural motion" motion compensation of the component pictures would be desirable). Furthermore all drivers etc. become more expensive.

More problematic is even that many displays such as LCD's cannot handle such high frequencies, which limits the market of good quality temporal color displays.

As color break-up is particularly important in black-and-white regions, EP 1,227,687 has chosen a different approach. They introduce a fourth white/transparent sector in their R,G,B filter color wheel. They then reproduce achromatic (grey colors only) and low saturated colors with as much of the pixel energy as possible in the white channel. I.e., e.g. all the grey pixels of a grey image part are generated solely during the white illumination time frame (darker pixels are produced by closing the light valve more), and during the three R,G,B colored time frames the light valve is closed entirely. This means that such a black-and-white picture is imaged onto the retina instantaneously (in one time frame), leading to zero color break-up (at most some blur), as the dark frames cannot convey erroneous color information to the retina.

Although this system works well for black-and-white pictures (which may be interesting for computer applications such as text processing), it does not work very well on video content, since in practice most video is not (approximately) achromatic.

An even more complex system is disclosed in US Patent Application No. 2004/0100589 in which the use of a color wheel with seven colors of which one white color is described.

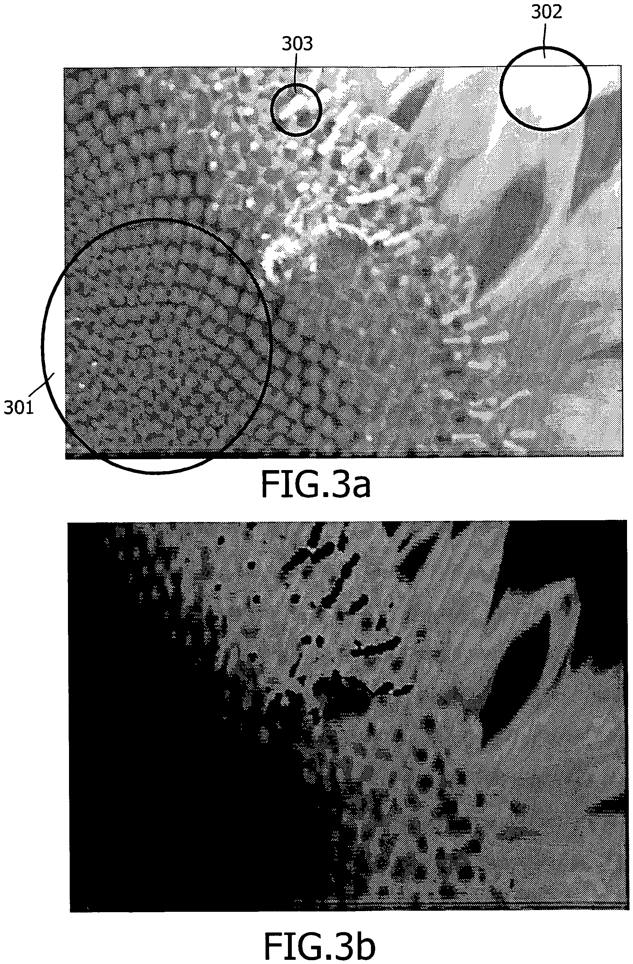

E.g. a picture of a yellow flower in a nature program (the example of Fig. 3) will still lead to severe color break-up, since there are no achromatic colors, but rather all yellow pixels have to be generated by a considerable amount of red and green.

It is desirable to provide conversion unit and corresponding method for obtaining color video signals manifesting relatively low color break-up.

This goal can be realized in a conversion unit according to claim 1
The purpose of the primary selection unit is to obtain an optimal new color primary giving rise to as little as possible color break-up, because most of the picture content/energy (at least in a region) is generated by means of this single new color primary, i.e. only during its timeframe. This is realized by calculating a new color primary which is dependent on the actual video picture (or a number of pictures in a shot, or part of a picture), e.g. in the example of the yellow flower since the distribution of colors is (tightly) around a yellow central color, such a central yellow will be a reasonable choice for the new color primary, leading to less fringing.

Because the new primary is selected picture content dependent, it is possible to always derive a more improved new primary than with a fixed additional primary as in EP 1,227,687, or fixed new primaries as disclosed in US Patent Application US 2004/0100589.

There are different strategies possible for deriving a good new primary, as illustrated in the embodiments, but the conversion unit may also obtain its new primary from outside (where it was calculated in advance) instead of computing it itself on-the fly.

A single well-chosen new primary will already lead to reduced fringing. This primary may be added to the R, G,B primaries (e.g. in a display which is able to change on-the-fly its number of primaries, e.g. by changing the modulation frequency of both the backlight and the light valve), or it may replace one of the three R,G,B primaries. In the latter case one needs to be careful that not too many colors of the picture to be reproduced fall outside the new gamut formed with the new primary, as these will have to be gamut mapped or clipped.

Going to a totally new color space may be done by deriving two or more further new primaries. E.g. optimal difference colors may be selected around the first new color primary (e.g. an average of all yellows in a picture), spanning e.g. a quadrangle around the first new primary.

A priori heuristics can be pre-determined which guarantee a posteriori collecting of the picture energy in the new primary determined with the heuristic. E.g., it can be mathematically shown that the average of the pixel colors is a heuristic with such a property.

The determination of the new primary is done for at least a region of a picture. E.g. for the yellow flower example it may be desirable to reduce mainly the fringing of highlights. Selecting a color by weighing the color required for these highlights more, may lead to an increase of fringing in other regions, but typically not, especially if new primaries are added to the existing ones.

A first possibility is to obtain the new primary by averaging over all colors in the picture (i.e. the region being the entire picture), and to apply a reproduction, with the new primary added, to the entire picture. Then fringing in some regions has appreciably improved, while remaining substantially the same (i.e. not improved) in other regions.

It is advantageous if the regions which have to be improved with priority can be selected more precisely (the average given only an overall, less determinable improvement), which can be done in a second possibility. Pixels in the at least one picture region may be selected by means of further rules, e.g. by taking a value of an annoyance measure into account. This means that the pixels/colors used in determining the new primary may be selected/rejected on the basis of an evaluation of an annoyance measure (i.e. the region of pixels used for computing the new primary and a possibly different resulting region of improved fringing may be disconnected).

Thirdly, for some display architectures (such as e.g. a LED display in which each LED pixel can create different colors) for different regions of a picture different new primaries are obtained and different color transforms are applied. This is useful e.g. for an image in which the lower part contains vegetation (for which a new green may be determined) and the upper part buildings (which are often relatively achromatic, hence a white primary may be added for reproducing the colors in this region).

The word optimization should be read more general than maximization. Although maximization is an easily calculatable operation giving good results, for further improvement it is not always optimal to put as much energy in one primary as possible. With optimization is meant any strategy (set of rules/formulae) leading to improved color break-up.

With picture energy is meant any measure correlating with an amount of driving, giving rise to a luminance contribution in the reproduction. It may typically be e.g. an amplitude of a coordinate in a primary colors basis decomposition.

It is emphasized that apart from the pixel amplitudes (and their modulation) in a primary component (leading to high amplitude primary colors imaged in an incorrect position of the viewer's retina) also the amount of detail is important, i.e. the local frequencies in a set of neighboring pixels in a component.

In an embodiment of the conversion unit the primary selection unit is arranged to compute the at least one new color primary on the basis of a statistic of picture element colors present at least in the at least one picture region.

Ideally each pixel would have a single reproducing primary, namely its own color, but that is infeasible. Hence since a number of primaries are selected to reproduce a number of pixel colors by combination, a statistical analysis to obtain an optimal reproduction basis is advantageous.

In a further embodiment the primary selection unit (511) is arranged to compute the at least one new color primary on the basis of the statistic being a weighted average of colors in the at least one picture region. The weights may all be equal to one. Or they can be dependent on the luminance of a pixel, since large luminances usually give rise to larger fringing.

In another embodiment the primary selection unit is arranged to compute the at least one new color primary on the basis of the statistic being a statistic emphasizing picture element colors present in a vicinity of picture object borders.

It is even better to compare the luminance of a pixel with that of its surroundings. E.g. an edge detector with a size of its Kernel (possibly subsampled) depending on object motion can be employed. In this way one can distinguish between smaller width structures (which cannot illuminate to many retinal cones erroneously) with large size color/object transitions.

In a high end embodiment of the conversion unit the primary selection unit is arranged to compute the at least one new color primary on the basis of the statistic being a statistic taking into account the visual annoyance of color transitions present at least in the at least one picture region.

Because the different cones and further retinal cells (e.g. the color differential behavior of the ganglion cells) and the cells further along the visual pathway have different behavior (as to size of receptive field, temporal behavior, etc.; in physiological and psychophysical experiments the on-off color behavior of different pathways has been studied) a blue-yellow transition is not equally annoying as a red-green transition, or e.g. a green-yellow transition. Hence e.g. user-panel tests can be used to record the annoyance of a number of normalized (for intensity, spatial size, duration, ...) color transitions. A color transition can be represented by decomposing it in any of a number of combinations of neighboring transitions (e.g. a saturated yellow to unsaturated orange object transition can be decomposed in a green-green + red-red transition or alternatively in a new_yellow-new_yellow transition + a red-red transition), and an optimal transition can be selected based on a total annoyance formula taking into account luminance (and size) weighed elementary annoyances of the experimentally determined transitions. A further interpolation can be employed to fine-tune between measured points.

Whereas the former embodiments take care only of the image physics, the previous embodiment takes into account the severity of fringes from the point of view of the (average) human visual system.

In another embodiment the conversion unit has a primary selection unit arranged to recursively re-compute the at least one new color primary on the basis of energies of the primary contributions of colors at least of pixels in the at least one picture region, in the output video signal resulting from the color transformation unit.

In the previous embodiments, to save calculations (e.g. a rough average on a subsampled picture can be done quickly) relatively good candidate for a new primary was produced from an a priori formula (or set of rules).

However this embodiment employs the decomposition actually obtained with the first iteration estimate (e.g. an average) and the primary selection unit determines a better decomposition on the basis of it. E.g. a formula incorporating the sum of all transitions in the picture may be used in the optimization, such as:

$$C = \sum_{\forall p} \sum_{\forall c} \left| I_c(p) - I_c(p-k) \right| \qquad\qquad [\text{Eq. 1}]$$

in which C is a cost, and the sum is taken over all picture pixels p and in all primary color components of the intensity value of a particular pixel and its neighbor displaced over a distance k.

It is advantageous when the primary selection unit is arranged to receive the at least one new color primary from a second network. Then another apparatus, e.g. typically on the content production side may determine the optimal primaries. A human operator may fine-tune them. It is economical and practical if the new primaries are encoded together with the picture itself. E.g. in MPEG, an additional field could be included to specify one or more new primaries for the next group of pictures (GOP).

Another embodiment of the conversion unit has a primary selection unit arranged to select the at least one new color primary on the basis of a maximization of the largest value of the color coordinate for this at least one new color primary (1P) over a set of pixels taken from at least the at least one picture region.

A previous embodiment focused on putting a major part of the picture energy on average in a new primary, i.e. a lot of the yellow pixels are represented predominantly by this primary, but other (e.g. reddish) pixel have a far lesser new primary coordinate.

The presently introduced primary is intended to well reproduce substantially all pixel colors in at least a region of the picture.

E.g. a number of primaries may be chosen bounding the colors present in the video, e.g. a parallelepiped just containing all colors (i.e. the most extreme colors lie within planes of the parallelepiped).

For many video sequences occurring in practice this embodiment is further improved if the primary selection unit is arranged to discard some of the pixels taken from at least the at least one picture region which are non-reproducible with the at least one new color primary from the maximization, in particular if a luminance correlate of the pixels has a low value.

In practice this may be realized by not calculating a plane comprising to primary color vectors bounding all colors in an interior gamut, but leaving some colors on the other side of the plane. How many colors can be left outside can be determined by a formula incorporating at the designer's choice such factors as:

- the distance to the plane (i.e. the amount of discoloration introduced by clipping or gamut mapping)
- the luminance of the out of gamut colors

etc.

- In particular dark colors need not be incorporated. They will lead to unnecessarily saturated primaries (i.e. fringing) more most colors for a gain of correct colors in a region where it is not so important (often the dark colors are difficult to discern due to such factors of exterior illumination reflecting on the display).

Such desaturated optimally bounding primaries lead to less color fringing, because the human visual system's attention is grabbed to a higher degree by saturated fringes than unsaturated fringes (which do not contain much light of the particular primary).

With luminance correlate is meant any function equivalent to a luminance, e.g. a lightness function.

The color transformation unit of the conversion unit may be arranged to maximize a portion of the picture energy allocated to the at least one new color primary, at least in the at least one picture region.

This is interesting for a conversion unit which adds one or more extra primaries to the R,G,B primaries and then transmits as much of the picture energy originally represented by the R,G,B primaries to the new primaries as is useful from the point of view of fringing. An exemplary implementation is described below.

Any of the above embodiments of the conversion unit and embodiments with combinations of the additional properties of the embodiments, which may lead to further reduced fringing, may be incorporated in a temporal color display comprising:

- a temporal color display unit and
- the particular conversion unit embodiment of which an output for supplying the output signal is connected to an input of the temporal color display unit, wherein, in operation, a time frame is associated with the at least one picture content dependent new color primary.

The operation of the conversion unit can be described as a method of processing an input video signal to yield an output video signal manifesting less color break-up when displayed on a temporal color display than the input video signal, the method comprising:

- inputting a temporal color video signal with a number of color primaries;
- computing at least one picture content dependent new color primary for optimization of a picture energy allocated to the new color primary and its time frame, in at least a picture region of the input video signal; and
- color transforming the input video signal to the output video signal represented in a color space comprising the at least one new color primary (1P), at least in the at least one picture region, which method may be performed e.g. in a television studio.

Further embodiments of the method have steps corresponding to the additional units of the conversion unit embodiments described above, e.g. a step of calculation a statistic such as an average on a region of a picture (e.g. highlights).

Furthermore, the new primarie(s) obtained by performing the method can be transmitted as an information unit over a second network, such as e.g. terrestrial television, a telephony network, or any networks which can transmit video or (ordered) data separate from the video.

The functioning of the conversion unit may be (partially) realized as a computer program product containing software sold separately, to enable a blank apparatus (such as a generic computer with video capabilities) to behave according to the present invention.

It is also advantageous to have according to the present invention a specially adapted electronic image representation, comprising an information unit comprising information of the at least one new color primary and an indication that the at least one new color primary is usable in the method or conversion unit of the present invention.

The indication may be a optionally present flag, or just the position of the data in the stream because the use of this position is defined in a standard as being reserved for new primaries calculated in conformance with and to be used for the goal of the present invention.

This image representation (e.g. a signal) is a new technologically fabricated entity allowing better devices such as reduced color break-up displays. It may be transmitted over a network or stored in a memory.

These and other aspects of the method and apparatus according to the invention will be apparent from and elucidated with reference to the implementations and embodiments described hereinafter, and with reference to the accompanying drawings, which serve merely as non-limiting specific illustrations exemplifying the more general concept, and in which dashes are used to indicate that a component is optional, non-dashed components not necessarily being essential.

In the drawings :

Fig. 1 schematically illustrates the problem of color break-up
Fig. 2 schematically shows the selection of a new video dependent primary;
Fig. 3, comprising Fig. 3a and Fig. 3b, shows a practical result of applying the present invention in a selected primary picture, which has been processed somewhat for improved printing in the patent publication;
Fig. 4 schematically shows residual fringing behavior with the present invention;
Fig. 5 schematically shows a composition of some of the embodiments of the conversion unit in a display;
Fig. 6 schematically shows a selection of new primaries optimally bounding the colors present in the video picture;
Fig. 7, comprising Fig. 7a and Fig. 7b, schematically shows geometrically the principle of transferring picture energy to a fourth primary;
Fig. 8 schematically shows an embodiment of a primary selection unit according to the invention; and
Fig. 9, comprising Fig. 9a and Fig. 9b, shows geometrically an exemplary way of calculating a tight bounding box with new de-saturated primaries.

In the present text the following notations will be used interchangeably, and a skilled reader acquainting himself with colorimetry theory will be able to interchange them: 1R denotes the basis vector for the primary red in three-dimensional color space, capital R denotes the contribution (e.g. digital value 0-255) of the red primary to make a particular color, which may also form part of a video signal, and small r denotes in this text a 2-dimensional color point, which may be the chroma-projection of a primary.

Fig. 1 schematically shows the problem of color break-up or fringing for temporal color generation. A temporal color generation display displays the pictures of the constituting primaries (typically R,G and B) in a temporal sequence. So if e.g. a monochromatic yellow (Y) object needs to be generated (see on the right of Fig. 1) on a black background, a particular contribution (e.g. voltage signal or digital representation, ...) $S\_G$ of the green primary and $S\_R$ of the red primary are required for the (pixels of) the yellow picture object, the contributions typically being of almost equal magnitude V [for simplicity the blue contribution is neglected].

If the eye of a human viewer were perfectly fixed with respect to the displayed picture, the temporal coloration could at most generate a flicker or flashing psychovisual effect. However, typically an eye will be in instantaneous motion relative to the display. This is due at least to the two following effects:

For stationary objects (e.g. subtitles on a dark background) the motion is due to the so-called saccades of the eye.

For moving objects, the relative motion is due to the fact that the eye cannot perfectly track the moving objects. This may be due to the fact that for a 4-times picture repetition of motion picture material on a 100Hz television, an object is repeated 4 times at the same spatial position of the display, rather than on its true linear motion path, which the eye- in expecting a natural motion- scans.

Both effects lead to the fact that an object boundary -e.g. between the yellow object and black background- is imaged at different positions on the retina 102 of the eye at different instants of time t.

In a temporal color generation, each contributing primary color picture has such a boundary in the same position of the display, but at successive instants in time, e.g. first the green transition/edge 103 is displayed (from small green to a large green contribution) and then the red transition 104. This means that there is a region R1 on the retina 102 which only receives the green primary photons and not yet those of the red, in which hence green is perceived rather than the intended yellow mixture of red and green.

This effect depends on such factors as the magnitude of the relative motion, temporal behavior of the cones and further retina and visual cells, etc. It is however perceived as particularly annoying because especially the red and green primary signals may be very saturated, i.e. the eye can hardly miss this conspicuous information, which is presented in an incorrect place of the picture imaged on the retina (around the real object boundaries). The visual system would reasonably correct for an incorrectly imaged yellow border, but a significant amount of a primary color is clearly perceived by most viewers, namely as the artifact of color break-up or color fringing. It is especially annoying for large primary contributions, such as in white subtitles on a black background. The effect may be enhanced if the viewer is distracted from the picture, e.g. by means of an object moving in front of the picture. Lastly the annoying effect also occurs on objects reflecting the picture (e.g. in case of front projection on reflecting windows or metal), i.e. a viewer may be annoyed by this in the temporally sensitive periphery of his vision.

The gist lying behind the present invention is that there are typically one or a few dominant colors in a picture. How dominant a color is depends on the picture content, but always at least some improvement can be achieved. The saturated primary contribution pictures occur because the "wrong" primaries are used.

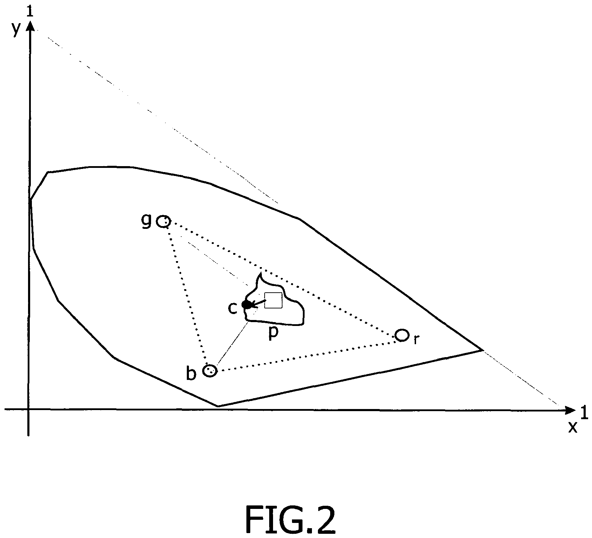

Referring to Fig. 2 e.g. a yellow color p needs approximately equally large contributions of red (r) and green (g) for displaying it, because it is very unlike those colors. However if one would choose the yellow color itself as a new primary p, only one primary contribution picture would be sufficient. This is true for a monochromatic yellow object on a black background. In this case the yellow picture contains black pixels (e.g. light valve closed) for the background and yellow pixels (light valve illuminated with the correct yellow opened to produce the correct amount of luminance) for the object. Since there is only one picture shown, only one transition 103 is presented to the eye. Hence whatever the relative motion of the eye, there are no cones that can receive photons from a different primary transition. This remains true if one provides for time slices for displaying other primaries which are set to zero, since than no photons corresponding to these primaries are emitted which can confuse the eye.

The same applies also to real pictures. Fig. 3 displays the red primary contribution pictures/components of a picture of a yellow sunflower. Fig. 3a shows the red component for R,G,B three primary reproduction (n.b. the green component is more or less the same qua energy, picture content, ...). Fig. 3b shows the red component for R,G,B,Y 4 primary reproduction. As the yellow primary Y has been tuned to the yellow colors in this picture, a major part of the picture energy/content is in this component, leaving only a "correction" of less energy in the red component. It is understandable that the upper picture contains a fully detailed replica of the flower, since it corresponds to an inappropriate primary for reproducing the flower, which has to be compared to the lower picture which contains correction data only for certain regions of the flower picture. E.g. in the core region 301 of the sunflower, the variations in luminance of the yellow component accurately reproduce the picture and almost no red correction is required. The same applies to the petal region 302. More interestingly, the highlight 303 is also mostly represented with only one correctly tuned primary color. This highlight would give a large fringing with normal R,G,B reproduction, but with the tuned R,G,B,Y reproduction hardly any fringing is perceived in this area, since all the energy of the highlight object is reproduced with the single yellow component (see the dark regions in Fig. 3b).

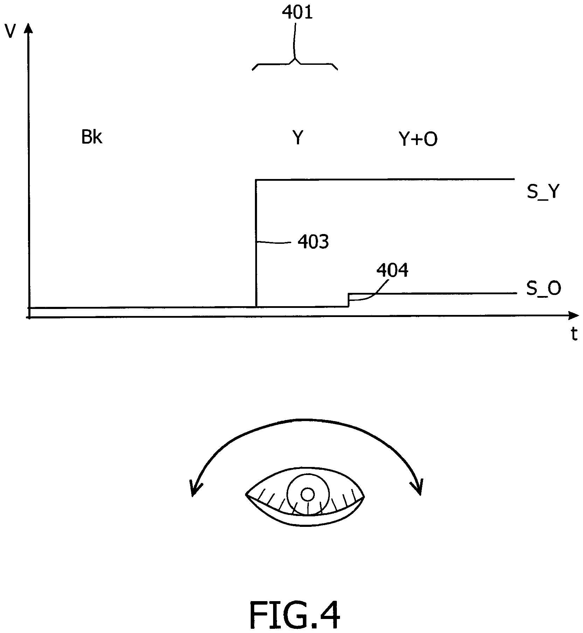

This effect is shown schematically in Fig. 4. Color variations of certain regions having e.g. color c relative to the well-chosen primary color p will, when represented in a second primary component (O), typically be of a magnitude smaller than those in the primary component. Since there is then only one large transition 403, and the small corrective transition of a second primary 404 gives only a small difference in perceived color, the temporally incorrectly imaged color Y of interval 401 is not really perceived as a differently colored fringe.

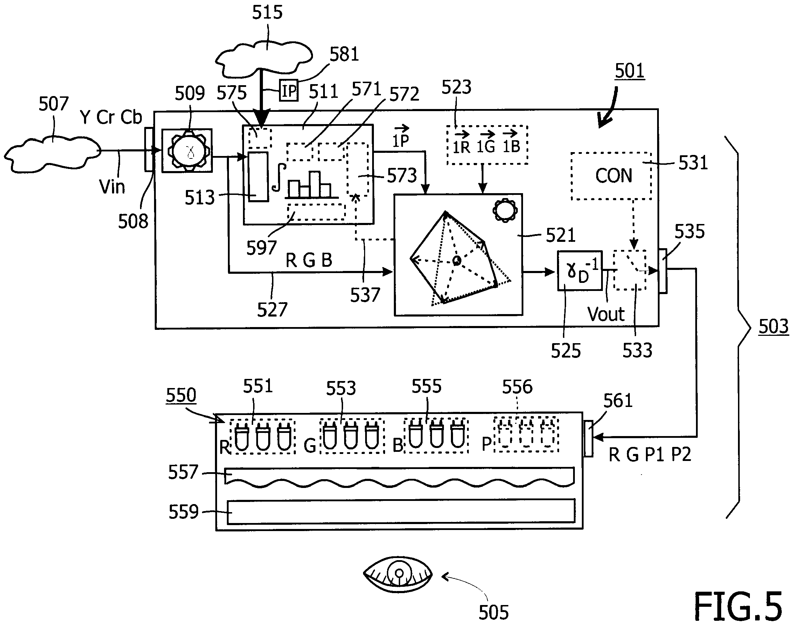

Fig. 5 schematically shows an embodiment of a conversion unit 501 for processing an input video signal Vin to yield an output video signal Vout manifesting less color break-up when displayed on a temporal color display, comprised in a temporal color display 503 comprising a transmissive direct-view LCD unit 550 with LED backlighting. It is to be emphasized that the skilled person can incorporate the conversion unit 501 of the present invention in other temporal color displays, with either a separate backlighting and light valve, or with unitary color generation modules (i.e. in which both the color and its amplitude is determined).

Non-limiting examples are: projection displays (e.g. with a DMD and LED illumination, ultra-small projectors of a size less than or comparable to a human hand), laser displays, LCD's with separately colored different backlighting units (especially fast LCD's such as e.g. "optical compensated bend" (OCB) or "ferro-electric" (FLC) LCD's which are fast enough to employ more than three sequential colors are becoming more popular), etc. Small direct view LCD's incorporating the present invention are interesting for mobile apparatuses such as mobile phones or handheld computers.

The temporal color displays for reproducing colors with the present invention can conceptually be grouped in two types.

Firstly, the display may be a standard R,G,B display, with primaries corresponding to e.g. the EBU phosphor standard. In such a display adaptive primaries can be made by illuminating with a combination of the R,G,B backlights instead of only a single one of them in a particular time frame, but these primaries are confined to the R,G,B display gamut/triangle.

A second type of display has a possibility of additional or replacing primaries (not equal to EBU phosphor colors), not necessarily within the R,G,B gamut. This can be a fixed number of fixed illuminants, as adding e.g. a yellow (Y), cyan (CY) and magenta (MG) primary to R,G,B primaries already creates such an enlarged gamut that most colors occurring in nature can be reproduced, i.e. those colors can also be selected as an adaptive new primary. A further embodiment of this second type of display has on the fly tunable primaries. E.g. from a broad spectrum light source an arbitrary color can be generated by means of a variable filter, which can be done e.g. with LCD's.

A e.g. yellow pixel created by light valve 559 may be generated by switching on a red (first) color generation unit 551 in a first time frame and controlling the light valve 551 so that it transmits to viewer 505 (or reflects in other displays, etc.) the correct contribution of red in the yellow to be reproduced, and mutatis mutandis a green color generation unit 553 in the next time frame. According to the invention, one would switch on a combination of red and green illumination in the first time frame. This can generate exactly the yellow color of the pixel, but perhaps its neighbor pixel is somewhat more orangeish. This can be corrected by providing a red illumination the next time frame: the light valve 559 will then be closed in the position of the first pixel and opened to the desired degree, for making the yellow color of the first pixel the desired orangeish, in the position of the second pixel. Similarly, for some pixel a contribution from a blue color generation unit 555 may be required, and if the display unit 550 is a multi-primary display unit, a contribution from a fourth color generation unit 556 in primary color P will in general also be present.

There are different ways to make the multi-colored backlighting, e.g. with a number of LED modules and an illumination homogenizer 557.

Conversion unit 501 receives through an input 508 video from a first network 507 capable of transmitting video (e.g. cable network, internet, mobile telephony network for portable video applications, ...). A color-preprocessing unit 509 performs an number of transformations to transform from e.g. the YcrCb color system to e.g. linear R,G,B (with EBU primaries) or XYZ. On this linearized picture (because this is the true luminance picture as viewer 505 will see it) an embodiment of the primary selection unit 511 according to the invention will do its computations. The primary selection unit may also solely or in addition be arranged to receive one or more new color primaries -encoded in an information unit 581-from a second network 515 (which may or may not be the same as the first network 507). E.g. this can be implemented over a separate data channel, which may be selected by identifying a program identifier corresponding to the desired video program. Different sets of new primaries may be selectable, each of the sets being more optimal for a different display type. Thereto the primary selection unit 511 (or a dedicated separate part of the conversion unit 501) comprises a reception unit 575, arranged to perform such functions as connecting, deformatting, etc.

The primary selection unit 511 can comprise a memory 513 for temporally storing at least part of an image (since global statistical operations will be done).

A way to derive a first new primary of low calculation complexity is to calculate the average of all colors in the image. This may be improved by incorporating a weighing scheme function of the luminance of pixels (or of amplitudes in the R,G,B components), e.g. only those colors are contained in the average which have a luminance higher than a threshold. Or a function valid over all possible luminance values is used for weighing, e.g.:

$$P = \sum_{p \in R} \begin{pmatrix} f_1(L)R \\ f_2(L)G \\ f_3(L)B \end{pmatrix} \qquad [\text{Eq. 2}]$$

in which P is the new primary color, the sum is taken over pixels p selected from a region (e.g. the entire picture, or pixels satisfying pre-determined criteria), and the three functions may be identical, e.g. the pixel luminance divided by a maximum luminance, e.g. the maximum theoretical or actual luminance in the picture.

Alternative statistical operations which provide good results are statistics describing occurrence probabilities of particular colors, such as e.g. the mode.

A segmentation unit 572 can be comprised to pre-segment an image in differently colored regions, according to pre-determined homogeneity tolerances. E.g. if a lot of yellow is present in certain parts of the picture and a lot of (purplish) bluish colors in another part, the average color would be white-ish, hence not very appropriate for either part.

With pre-segmentation two new primaries can be computed: one average of the yellows, and one of the bluish colors. This selection of optimal new primaries should be distinguished from the usage of the new primaries. Two DIFFERENT color systems can be applied in the different (yellowish/bluish) regions of the picture, insofar the geometry of the illumination allows for this. E.g., if a matrix of multicolor LED backlight units is used, one can choose different illumination colors for this units which is optimal (at least) around the borders of the yellowish objects (the interiors being less critical for incorrect color system choice, since the eye moves between differently positioned similar colors and will hence not perceive fringes) versus around borders of the bluish objects. But alternatively a SINGLE color system can be used for the entire picture, but with these TWO new primaries added to R,G,B primaries. This will largely have the same effect, since yellowish objects will have low coefficient values of the bluish primary (although the coefficient distribution is different for the two cases), and allows application of the improved fringing color representation on different types of display which do not have such a high degree of illumination accuracy (e.g. just a few sets of LEDs or Fluorescent lamps with specified phosphor coatings on the sides of an LCD panel).

The advantage of having a segmentation unit is that further rules can be introduced for selecting particular regions of the picture which are likely to introduce annoying fringing.

By means of an edge detector unit 571 pixels in a vicinity of edges can be selected or differently weighed, e.g. depending on a distance to a color or object edge.

Edge detectors are known per se, but can be tuned to the problem of color edges leading to color fringes.

E.g., the following edge detector can be used:

$$E = (\sum_{C} A_C(\hat{C}) \left| \sum_{p \in S(l)} w(p) * C(p) - \sum_{p \in S(r)} w(p) * C(p) \right|) / N \qquad [Eq. 3],$$

in which E is a measure of the edge strength, the sum is taken of absolute differences for each color component picture (e.g. R,G,B), multiplied with a weighing function for the different components $A_c(\hat{C})$ which may be a different constant for each component or functionally dependent on an estimate $\hat{C}$ (e.g. the average of the color component in a support region), of weighed -as a function of the pixel p position- values of the color component at the pixel position, in a number of selected (e.g. subsampled) pixel positions in a left support S(1) minus weighed color component values in a right support S(r). N is a normalizer. The weighing function $A_c(\hat{C})$ allows for estimating the annoyance of a color edge.

In some embodiments, an optimization unit 573 is comprised for iteratively (at lest with one second step) refining the new primary selection and the resulting decomposition of the colors in the picture.

Numerous cost functions can be used, typically taking into account how much of the energy is distributed in different primaries, e.g. a function of the average energy in the largest primary and the average energy in the second largest. Thereto information about the decomposition is transmitted to the primary selection unit 511 over connection 537. More complex functions may be used, e.g. weighing the energies of pixels according to their distance to a color edge as determined above, taking into account the saturation or color difference between the components etc.

The optimization mathematics itself, e.g. steepest descent or genetic algorithms is known per se.

At least one video-adaptive new primary 1P is output of the primary selection unit 511, and input for a color transformation unit 521. Depending on the type of algorithm (taking into account factors such as how large compared to the video colors present the gamut is which can be spanned with the new primaries) either only the new primaries may form the new color system, or they may be supplemented by one or more of the original primaries, typically pre-stored in a memory 523 (there are currently not so many primaries employed in video standards). E.g. it may well be that four new primaries span most of the red, yellow, greenish colors, but saturated whites can not be made, a region of the video content gamut which can be reproduced by adding the blue primary (per definition all colors in the video are reproducible by a color system comprising the three R,G,B primaries, if they were captured with an R,G,B camera, and adding further primaries will not change this).

The original video is also input via connection 527 to the color transformation unit 521.

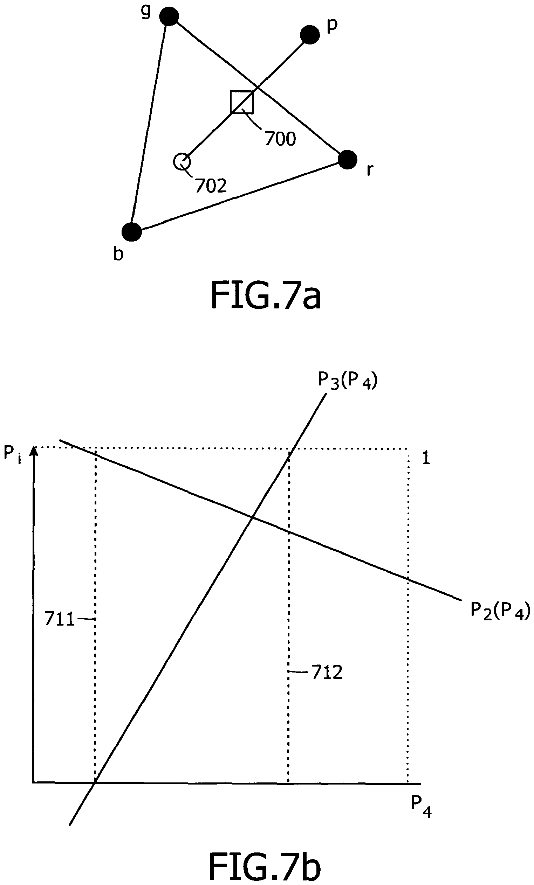

Different conversion strategies to multiprimary color systems exist (see e.g. WO02/099557 or WO97/42770) but a new scheme for conversion when adding a further primary is described below with the aid of Fig. 7.

Once the coordinates for each primary in linear light space of the pixels are known, they are sent to a color post processing unit 525, which performs inter alia a gamma mapping on the channels with the inverse of the display gamma (e.g. some LCD's have a sigmoidal gamma). Note that the gamma to apply may be dependent on the primary colors in the color system, so an embodiment of the color post-processing unit 525 stores a number of gamma functions. A controller 531 may allow a transfer unit 533 to transfer the final video to the output 535 only if the desired values have been obtained (for non-recursive computation transfer unit 533 need not be present).

A quick analysis unit 597 is present in some embodiments. As recalculating new primaries requires computational resources, cheaper systems need to limit those, hence it is desirable if new primaries are only recalculated for a sequence of pictures, such as a scene. The quick analysis unit 597 is arranged to perform a quick characterization of the picture colors. E.g. it may analyze a few colors at particular positions in the image and by evaluating a difference function interpret that e.g. a forest scene is still going on. The quick analysis unit 597 is further arranged to initiate (or alternative discontinue a blocking) a new primary selection phase if the difference evaluated indicates that a new scene has started (e.g. a significant increase of reddish colors), e.g. via a control code. Note that a simple scene detector based on (subsampled) color statistics is sufficient, because the present invention is about the fringing of particular color pictures.

However further embodiments of the quick analysis unit 597 comprise a connection to the second network 515, for receiving metadata (such as descriptors about the meaning of the following pictures), and basing the initiating of the primary selection on this metadata also.

It should be noted that between the color transformation unit 521 and the color post processing unit 525 optionally a dynamic contrast unit may be present which is arranged to further modify the pixel color coordinates R,G, B,X,... to be sent to the light valve for the successive time frames. The modification is done so that the light frame is maximally open for a pixel in the picture having the largest contribution of the particular component (e.g. R), and hence the red illumination is similarly reduced.

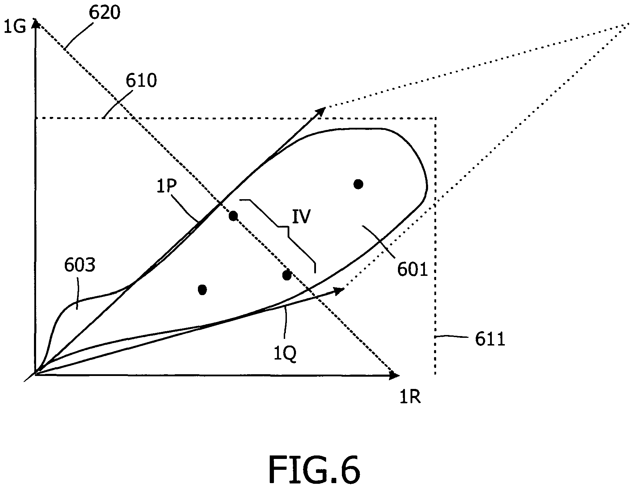

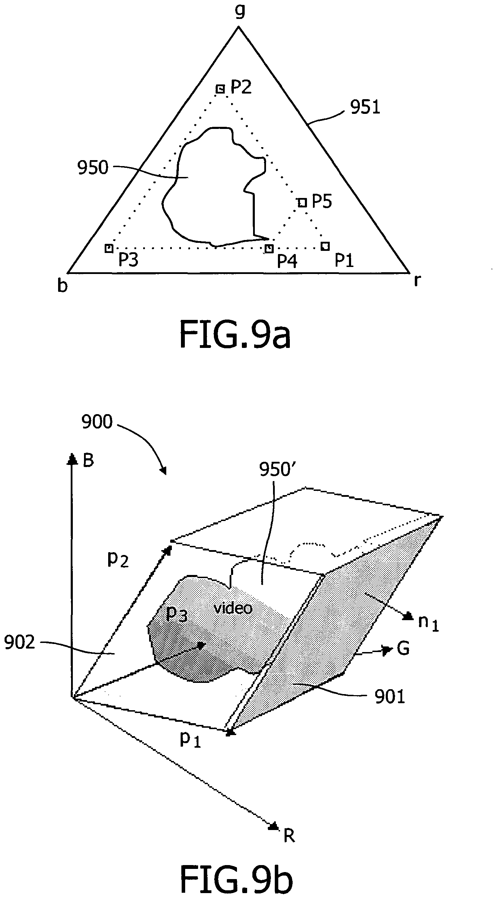

Fig. 6 schematically illustrates a different approach to calculate video dependent primaries yielding less color break-up. The rationale behind this approach is that primaries as de-saturated as possible are computed, which still encompass (the majority of) the colors occurring in the video picture(s). Gamut 601 is the gamut of actually occurring video colors (e.g. during a night scene; subsequently during a forest scene the primaries will be recalculated). The bounding representable gamut with new primaries 1P and 1Q- also shown in 3D in Fig. 9b as bounding gamut 900 encompassing video colors 950'- is smaller than the one obtained by just rescaling the original primaries 1R and 1G (see lines 610 and 611).

All colors in the three-dimensional gamut 601, will also fall in a two-dimensional gamut IV, for example in the Maxwellian color plane 620, 951 spanned by the tips of the unit vectors 1R, 1G and 1B, or an rg color plane, which is the projection of the Maxwellian color plane 620, 951 onto the (1R, 1G)-plane.

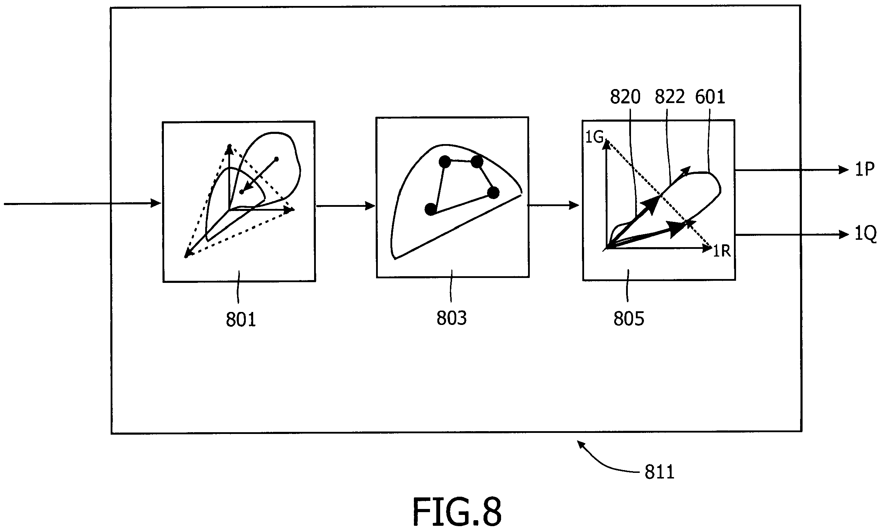

Hence, one possibility to arrive at a final multidimensional set of (3D) color primaries is to first calculate optimally bounding new primaries in such a color plane, as is illustrated in Figs. 8 and 9.

A projection unit 801 of this embodiment 811 of the primary selection unit 511 projects the three-dimensional (R,G,B) tuples to two-dimensional values with known colorimetric functions like :

$$r = \frac{R}{(R+G+B)}$$

Subsequently a two-dimensional primary selector 803 determines limiting primaries in the color plane. One could try a triangle which encloses all colors in the video picture(s), although this will be slightly less inefficient, leading to primaries which are too saturated.

E.g., in Fig. 9a, P1. P2 and P3 are such primaries. They are simply determined on the basis of the maximal and minimal r,g, and b components for all occurring pixel colors 950 in the video selection (e.g. a GOP or scene), hence the gamut spanned by the new primaries is determined by a triangle with sides parallel to those of the r,g,b triangle. E.g. in this example:

$$P_1 = \begin{bmatrix} 1-(g_{min}+b_{min}) \\ g_{min} \\ b_{min} \end{bmatrix}; \qquad P_2 = \begin{bmatrix} r_{min} \\ 1-(r_{min}+b_{min}) \\ b_{min} \end{bmatrix}; \qquad P_3 = \begin{bmatrix} r_{min} \\ g_{min} \\ 1-(g_{min}+r_{min}) \end{bmatrix};$$

$$[\text{Eqs. 4}]$$

To get a closer fit, a polygonal with more primaries (e.g. P2, P3, P4, P5) is calculated. Then the maxima of the r,g,b components (which are easily computed) may be employed e.g.:

$$P_4 = \begin{bmatrix} r_{max} \\ g_{min} \\ 1-(g_{min}+r_{max}) \end{bmatrix} \qquad [\text{Eq. 5}]$$

In the calculation of the maxima, also percentiles can be used (e.g. 3% of the colors are allowed to fall outside the gamut of the new primaries), and luminance weighed statistics can similarly be used.

Of course care has to be taken about the capabilities of the display unit. E.g. if because of the slowness of the display only four time frames can be selected, the constraint is that at most a quadrangle may be chosen. Furthermore, the selected primaries may need to be within the r,g,b triangle of the display unit as explained above.

Another embodiment may first derive a curve around the gamut 950 color points. This can be done by calculating the center of mass, and for each direction selecting the furthest point. A number of primaries can then by calculated by polygonalizing the curve with any technique known from image processing for polygonalizing curves (e.g. subdividing a line based on the point in the interval furthest removed from the line).

From this first step already knowing the chromaticities of the bounding primaries, the final primaries are calculated by a three-dimensional primary calculation unit 805.

Thereto the unit luminance primaries 820 are scaled to final new primaries 822 for output (1P, 1Q) which encompass (substantially) all colors are comprised in the three-dimensional parallelepiped spanned by those primaries. Some small bulges 603 of colors to be clipped may need to be allowed (e.g. discounting darker colors).

For encompassed colors the following equations must be true (for (substantially) all colors in the selected pixel set):

$$\vec{n}.\vec{S}_L \le \vec{n}.\vec{C} \le \vec{n}.\vec{S}_H \qquad\qquad \text{[Eq. 6]},$$

in which C is a color occurring in the video picture, n is a normal to a (hyper)plane containing N-1 primaries (N being the number of primaries), S is a support (or offset) vector i.e. one of the vectors producing a point in the hyperplane, typically a corner point (e.g. p1 is a possible support for plane 901, but so would be its other 4 corners). The point denotes the vectorial in-product, and the suffixes L and H indicate lower and upper support vectors (i.e. a lower/darker and higher/lighter side bounding plane, e.g. 902 versus 901, support vector). The term $\overline{n}.\overline{S}_L$ may for simplicity be chosen equal to zero as in Fig. 9b.

Note that a normal can be calculated from the vectorial out product of two primaries.

Eq. 6 can also be simplified into two equations:

$$\vec{n}.\vec{S}_L \le \min(\vec{n}.\vec{C})$$

$$\max(\vec{n}.\vec{C}) \le \vec{n}.\vec{S}_H \qquad\qquad \text{[Eqs. 7]}$$

In three dimensions, the planes can be derived from simple calculations, since as support vector for each of higher/lighter side bounding planes the Maxwellian unit primary Pi times a scaling factor may be used, leading finally to the solution for these three scaling factors:

$$k_1 = \frac{\max(n_1 \cdot x_i)}{n_1 \cdot P_1} \qquad\qquad \text{[Eq. 8]}$$

etc., in which the P is the unit luminance primary color determined with any of the above first derivation steps in the color plane.

However for more than three primaries, the positions/support vectors of the bounding planes become interdependent (their normals are of course fixed by the first step of deriving colors in the plane and converting them to unit luminance three dimensional colors).

Namely one gets a system with more equations (all the planes) than variables (the scaling factors k for each primary), which can be solved e.g. by mathematical linear programming (a technique known per se to somebody skilled or having acquainted himself to this field of mathematics).

Since the support vectors are linear combinations of the unit luminance primaries from the first step (e.g. an upper plane support vector may be k1*P1+k2*P2+...), the final equation to be optimized (solved for the k's) under the constraint $\Sigma k_i = $ min*imal* becomes

$$\begin{pmatrix} \max\limits_{\forall C}(\vec{n}_{12}.\vec{C}) \\ \cdot \\ \cdot \\ \max\limits_{\forall C}(\vec{n}_{41}.\vec{C}) \end{pmatrix} \le \begin{pmatrix} \vec{n}_{12}.\vec{P}_1 l_1 & \cdot & \cdot & \\ & \cdot & \cdot & \\ & \cdot & & \cdot \\ & & & \vec{n}_{41}.\vec{P}_4 l_n \end{pmatrix} \begin{pmatrix} k_1 \\ k_2 \\ k_3 \\ k_4 \end{pmatrix},$$

in which the 1's are Booleans indicating whether a particular primary forms part of the support vector chosen for a hyperplane.

The same equations exist then for the minima (see above Eqs. 7).

Of course the optimization can also be done directly in the three-dimensional color space without a first step in the color plane, but then it is more calculation complex.

Above the focus was on computing an optimal/good new primary leading to less fringing. The second question is how to perform a good transformation once having the new primaries, as it should be clear that putting an approximately equal energy in all components may well lead to a correct color reproduction but not to a good fringing behavior.

Fig. 7 illustrates schematically a way of incorporating energy into a fourth added primary, which may be generalized to several primaries.

Rather than having an indeterminate 4x3 matrix for going from (R,G,B) to 4 primaries, the decomposition can be constrained by reproducing a color 700 as a mixture of a trichromatically reproduced color 702 and an added amount of the fourth primary:

$$\begin{pmatrix} p_r^{'} \\ p_g^{'} \\ p_b^{'} \end{pmatrix} = \begin{pmatrix} c_r \\ c_g \\ c_b \end{pmatrix} - p_4 \begin{pmatrix} X_4 \\ Y_4 \\ Z_4 \end{pmatrix},$$

wherein the first vector after the equality sign is the fixed amount of r,g, and b required to reproduce color 700 in a purely trichromatic system (i.e. the input video color), and the second vector is the fixed position of the fourth primary in a universal color system (e.g. X,Y,Z). p4 is the amplitude given to the fourth primary. Hence, the amplitudes required for the three (r,g,b) other primaries (vector before the equality sign) required to reproduce color 700 in a tetrachromatic system following the proposed mix are linearly dependent on how much is mixed to the fourth primary. Note that this can be represented as a color 702 shifted outwards from 700 along the direction p-700.

This is illustrated in Fig. 7b. No coordinate can be smaller than zero or larger than 1 however (normalized), which would mean that the desired color cannot be made with such a combination.

With such a scheme it is easy to derive the maximally and minimally possible values for p4 when reproducing color 700, and hence by reading the linear graphs also the other coordinates. Namely this minimum value P4min (711) is one in which one of the other primaries has a value of zero or 1.

Hence, one immediately also has the maximum picture energy put in the e.g. yellow new primary.

In practice it is not always optimal to use a maximal energy and bounding primary, but an intermediate strategy may be used between the bounding and average primary selection strategies, e.g. selecting a primary somewhere in the outer parts of a cluster of the video colors.

The algorithmic components disclosed in this text may in practice be (entirely or in part) realized as hardware (e.g. parts of an application specific IC) or as software running on a special digital signal processor, or a generic processor, etc.

Under computer program product should be understood any physical realization of a collection of commands enabling a processor -generic or special purpose-, after a series of loading steps (which may include intermediate conversion steps, like translation to an intermediate language, and a final processor language) to get the commands into the processor, to execute any of the characteristic functions of an invention. In particular, the computer program product may be realized as data on a carrier such as e.g. a disk or tape, data present in a memory, data traveling over a network connection -wired or wireless- , or program code on paper. Apart from program code, characteristic data required for the program may also be embodied as a computer program product.

Some of the steps required for the working of the method may be already present in the functionality of the processor instead of described in the computer program product, such as data input and output steps.

It should be noted that the above-mentioned embodiments illustrate rather than limit the invention. Apart from combinations of elements of the invention as combined in the claims, other combinations of the elements are possible. Any combination of elements can be realized in a single dedicated element.

Any reference sign between parentheses in the claim is not intended for limiting the claim. The word "comprising" does not exclude the presence of elements or aspects not listed in a claim. The word "a" or "an" preceding an element does not exclude the presence of a plurality of such elements.

## Claims

1. A conversion unit (501) for processing an input video signal (Vin) to yield an output video signal (Vout) manifesting less color break-up when displayed on a temporal . color display than the input video signal wherein the color display is able to change on-the-fly its primaries, the conversion unit comprising:

    - an input (508) for a temporal color video signal with a number of color primaries;

- a primary selection unit (511) arranged to obtain and introduce at least one picture content dependent new color primary (1P) in at least a picture region of the input video signal (Vin); the new color primary is computed on the basis of a statistic of picture element colors present in said picture region for an optimization of picture energy allocate to said new color primary during a time frame of said new color primary,

and

- a color transformation unit (521) arranged to convert the input video signal to the output video signal represented in a color space comprising said new color primary (1P), at least in the at least one picture region.

2. A conversion unit (501) as claimed in claim 1, in which the primary selection unit (511) is arranged to compute said new color primary (1P) on the basis of a statistic of picture element colors present at least in said picture region.

3. A conversion unit (501) as claimed in claim 2, in which the primary selection unit (511) is arranged to compute the said new color primary (1P) on the basis of the statistic being a weighted average of colors in said picture region.

4. A conversion unit (501) as claimed in claim 2, in which the primary selection unit (511) is arranged to compute said new color primary (1P) on the basis of the statistic being a statistic emphasizing picture element colors present in a vicinity of picture object borders.

5. A conversion unit (501) as claimed in claim 2 or 4, in which the primary selection unit (511) is arranged to compute said new color primary (1P) on the basis of the statistic being a statistic taking into account the visual annoyance of color transitions present at least in said picture region.

6. A conversion unit (501) as claimed in claim 1, in which the primary selection unit (511) is arranged to recursively re-compute said new color primary (1P) on the basis of energies of the primary contributions of colors of pixels in said picture region, in the output video signal resulting from the color transformation unit (521).

7. A conversion unit (501) as claimed in claim 1, in which the primary selection unit (511) is arranged to receive the said new color primary (1P) from a network (515).

8. A conversion unit (501) as claimed in claim 1, in which the primary selection unit (511) is arranged to select said new color primary (1P) on the basis of a maximization of the largest value of the color coordinate for this new color primary (1P) over a set of pixels taken from said picture region.

9. A conversion unit (501) as claimed in claim 8, in which the primary selection unit (511) is arranged to discard some of the pixels taken from said picture region which are non-reproducible with said new color primary (1P) from the maximization, in particular if a luminance correlate of the pixels has a low value.

10. A conversion unit (501) as claimed in claim 1, in which the color transformation unit (521) is arranged to maximize a portion of the picture energy allocated to said new color primary (1P), at least in said picture region.

11. A conversion unit (501) as claimed in claim 1, wherein the conversion unit comprises a segmentation unit (572) to pre-segment an image in differently colored regions.

12. A color display, which is able to change on-the-fly its primaries, comprising:

- a temporal color display unit (550) and
- conversion unit (501) as claimed in any of the above claims, of which an output (535) for supplying the output signal (Vout) is connected to an input (561) of the temporal color display unit (550) wherein, in operation, a time frame is associated with the new color primary.

13. A method of processing an input video signal (Vin) to yield an output video signal (Vout) manifesting less color break-up when displayed on a temporal color display than the input video signal wherein the color display is able to change on-the-fly its primaries the method comprising:

- inputting a temporal color video signal with a number of color primaries;
- computing at least one picture content dependent new color primary (1P) for optimization of a picture energy allocated to the new color primary during its time frame, in at least a picture region of the input video signal (Vin); and
- color transforming the input video signal to the output video signal represented in a color space comprising the said new color primary (1P), at least said picture region.

**14.** A method of processing an input video signal (Vin) as claimed in claim 13 in which the computing said new color primary (1P) is performed on the basis of a statistic of picture element colors present at least in said picture region.

**15.** A method of processing an input video signal (Vin) as claimed in claim 13 or 14 comprising a further step of transmitting as an information unit (581) the new color primary (1P) over a network (515).

**16.** A computer program product comprising a processor readable code to enable a processor to execute the method according to claim 13 or 14, the processor readable code comprising:

- code for computing at least one picture content dependent new color primary (1P) for an optimization of a picture energy allocated to the new color primary during its time frame, in at least a picture region of the input video signal (Vin); and
- code for color transforming the input video signal to the output video signal represented in a color space comprising said new color primary (1P), at least in said picture region.

**Patentansprüche**

**1.** Umwandlungseinheit (501) zur Verarbeitung eines Eingangsvideosignals (Vin), um ein Ausgangsvideosignal (Vout) abzugeben, das bei Darstellung auf einem temporalen Farbdisplay eine geringere Farbenzerlegung als das Eingangsvideosignal aufweist, wobei das Farbdisplay imstande ist, spontan seine Primärfarben zu verändern, wobei die Umwandlungseinheit umfasst:

- einen Eingang (508) für ein temporales Farbvideosignal mit einer Anzahl von Primärfarben;
- eine Primärfarbenauswahleinheit (511), die so eingerichtet ist, dass sie mindestens eine bildinhaltabhängige, neue Primärfarbe (1P) in zumindest einem Bildbereich des Eingangsvideosignals (Vin) erhält und einsetzt; wobei die neue Primärfarbe auf der Grundlage einer Statistik von in dem Bildbereich vorhandenen Bildelementfarben für eine Optimierung von Bildenergie, die der neuen Primärfarbe während eines Zeitrahmens der neuen Primärfarbe zugeordnet wird, berechnet wird; sowie
- eine Farbumwandlungseinheit (521), die so eingerichtet ist, dass sie das Eingangsvideosignal in das in einem Farbraum mit der neuen Primärfarbe (1P) dargestellte Ausgangsvideosignal zumindest in dem mindestens einen Bildbereich umwandelt.

**2.** Umwandlungseinheit (501) nach Anspruch 1, in der die Primärfarbenauswahleinheit (511) so eingerichtet ist, dass sie die neue Primärfarbe (1P) auf der Grundlage einer Statistik von in zumindest dem Bildbereich vorhandenen Bildelementfarben berechnet.

**3.** Umwandlungseinheit (501) nach Anspruch 2, in der die Primärfarbenauswahleinheit (511) so eingerichtet ist, dass sie die neue Primärfarbe (1P) auf der Grundlage der Statistik, die einen gewichteten Mittelwert von Farben in dem Bildbereich darstellt, berechnet.

**4.** Umwandlungseinheit (501) nach Anspruch 2, in der die Primärfarbenauswahleinheit (511) so eingerichtet ist, dass sie die neue Primärfarbe (1P) auf der Grundlage der Statistik berechnet, bei der es sich um eine Statistik handelt, die in der Nähe von Bildobjekträndern vorhandene Bildelementfarben hervorhebt.

**5.** Umwandlungseinheit (501) nach Anspruch 2 oder 4, in der die Primärfarbenauswahleinheit (511) so eingerichtet ist, dass sie die neue Primärfarbe (1P) auf der Grundlage der Statistik berechnet, bei der es sich um eine Statistik handelt, die die visuelle Beeinträchtigung von zumindest in dem Bildbereich vorhandenen Farbübergängen berücksichtigt.

**6.** Umwandlungseinheit (501) nach Anspruch 1, in der die Primärfarbenauswahleinheit (511) so eingerichtet ist, dass sie in dem aus der Farbumwandlungseinheit (521) resultierenden Ausgangsvideosignal die neue Primärfarbe (1P) auf der Grundlage von Energien der Primärfarbenbeiträge von Farben von Pixeln in dem Bildbereich rekursiv neu berechnet.

**7.** Umwandlungseinheit (501) nach Anspruch 1, in der die Primärfarbenauswahleinheit (511) so eingerichtet ist, dass sie die neue Primärfarbe (1P) von einem Netzwerk (515) empfängt.

**8.** Umwandlungseinheit (501) nach Anspruch 1, in der die Primärfarbenauswahleinheit (511) so eingerichtet ist, dass sie die neue Primärfarbe (1P) auf der Grundlage einer Maximierung des größten Wertes der Farbkoordinate für diese neue Primärfarbe (1P) gegenüber einer Gruppe von Pixeln aus dem Bildbereich auswählt.

**9.** Umwandlungseinheit (501) nach Anspruch 8, in der die Primärfarbenauswahleinheit (511) so eingerichtet ist, dass sie einige der Pixel aus dem Bildbereich, die mit der neuen Primärfarbe (1P) durch die Maximierung nichtreproduzierbar sind, insbesondere wenn ein Luminanzkorrelat der Pixel einen geringen Wert aufweist, verwirft.

**10.** Umwandlungseinheit (501) nach Anspruch 1, in der die Farbumwandlungseinheit (521) so eingerichtet ist, dass sie einen Teil der Bildenergie, die der neuen Primärfarbe (1P) zugeordnet ist, zumindest in dem Bildbereich maximiert.

**11.** Umwandlungseinheit (501) nach Anspruch 1, wobei die Umwandlungseinheit eine Segmentierungseinheit (572) umfasst, um ein Bild in verschiedenfarbigen Bereichen vorzusegmentieren.

**12.** Farbdisplay, das imstande ist, spontan seine Primärfarben zu verändern, mit:

- einer temporalen Farbdisplayeinheit (550), und
- einer Umwandlungseinheit (501) nach einem der vorangegangenen Ansprüche, von der ein Ausgang (535) zur Abgabe des Ausgangssignals (Vout) mit einem Eingang (561) der temporalen Farbdisplayeinheit (550) verbunden ist, wobei bei Betrieb der neuen Primärfarbe ein Zeitrahmen zugeordnet wird.

**13.** Verfahren zur Verarbeitung eines Eingangsvideosignals (Vin), um ein Ausgangsvideosignal (Vout) abzugeben, das bei Darstellung auf einem temporalen Farbdisplay eine geringere Farbenzerlegung als das Eingangsvideosignal aufweist, wobei das Farbdisplay imstande ist, spontan seine Primärfarben zu verändern, wobei das Verfahren die folgenden Schritte umfasst, wonach:

- ein temporales Farbvideosignal mit einer Anzahl von Primärfarben eingegeben wird;
- mindestens eine bildinhaltabhängige, neue Primärfarbe (1P) zur Optimierung einer Bildenergie, die der neuen Primärfarbe während ihres Zeitrahmens zugeordnet wird, in zumindest einem Bildbereich des Eingangsvideosignals (Vin) berechnet wird; und
- das Eingangsvideosignal in das in einem Farbraum mit der neuen Primärfarbe (1P) dargestellte Ausgangsvideosignal zumindest in dem Bildbereich farbumgewandelt wird.

**14.** Verfahren zur Verarbeitung eines Eingangsvideosignals (Vin) nach Anspruch 13, wobei die Berechnung der neuen Primärfarbe (1P) auf der Grundlage einer Statistik von in zumindest dem Bildbereich vorhandenen Bildelementfarben vorgenommen wird.

**15.** Verfahren zur Verarbeitung eines Eingangsvideosignals (Vin) nach Anspruch 13 oder 14, wonach in einem weiteren Schritt eine Informationseinheit (581) die neue Primärfarbe (1P) über ein Netzwerk (515) überträgt.

**16.** Computerprogrammprodukt mit einem prozessorlesbaren Code, um einem Prozessor die Möglichkeit zu geben, das Verfahren nach Anspruch 13 oder 14 auszuführen, wobei der prozessorlesbare Code umfasst:

- einen Code zur Berechnung einer bildinhaltabhängigen neuen Primärfarbe (1P) für eine Optimierung einer Bildenergie, die der neuen Primärfarbe während ihres Zeitrahmens zugeordnet wird, in zumindest einem Bildbereich des Eingangsvideosignals (Vin); sowie
- einen Code zur Farbumwandlung des Eingangsvideosignals in das in einem Farbraum mit der neuen Primärfarbe (1P) dargestellte Ausgangsvideosignal zumindest in dem Bildbereich.

**Revendications**

**1.** Unité de conversion (501) permettant de traiter un signal vidéo d'entrée (Vin) pour fournir un signal vidéo de sortie (Vout) présentant une rupture de couleur moindre lorsqu'il est affiché sur un écran couleur temporelle que le signal vidéo d'entrée, l'écran couleur étant capable de changer sur-le-champ ses primaires, l'unité de conversion comprenant :

- une entrée (508) pour un signal vidéo couleur temporelle avec un certain nombre de couleurs primaires ;
- une unité de sélection de primaire (511) conçue pour obtenir et introduire au moins une nouvelle couleur primaire (IP) dépendant du contenu de l'image dans au moins une région de l'image du signal vidéo d'entrée (Vin) ; la nouvelle couleur primaire est calculée sur la base d'une statistique des couleurs de l'élément d'image présentes dans ladite région de l'image pour optimiser l'énergie de l'image affectée à ladite nouvelle couleur primaire pendant un laps de temps de ladite nouvelle couleur primaire ; et
- une unité de transformation de couleur (521) conçue pour convertir le signal vidéo d'entrée en signal vidéo de sortie représenté dans un espace de couleur comprenant ladite nouvelle couleur primaire (IP), au moins dans l'au moins une région de l'image.

2. Unité de conversion (501) selon la revendication 1, dans laquelle l'unité de sélection de primaire (511) est conçue pour calculer ladite nouvelle couleur primaire (IP) sur la base d'une statistique des couleurs de l'élément d'image présentes au moins dans ladite région de l'image.

3. Unité de conversion (501) selon la revendication 2, dans laquelle l'unité de sélection de primaire (511) est conçue pour calculer ladite nouvelle couleur primaire (IP) sur la base de la statistique qui est une moyenne pondérée des couleurs dans ladite région de l'image.

4. Unité de conversion (501) selon la revendication 2, dans laquelle l'unité de sélection de primaire (511) est conçue pour calculer ladite nouvelle couleur primaire (IP) sur la base de la statistique qui est une statistique qui accentue les couleurs de l'élément d'image présentes à proximité des bordures de l'objet de l'image.

5. Unité de conversion (501) selon la revendication 2 ou 4, dans laquelle l'unité de sélection de primaire (511) est conçue pour calculer ladite nouvelle couleur primaire (IP) sur la base de la statistique qui est une statistique qui tient compte de la gêne visuelle liée aux transitions de couleurs présentes au moins dans ladite région de l'image.

6. Unité de conversion (501) selon la revendication 1, dans laquelle l'unité de sélection de primaire (511) est conçue pour recalculer de façon récursive ladite nouvelle couleur primaire (IP) sur la base d'énergies des contributions de primaires de couleurs de pixels dans ladite région de l'image, dans le signal vidéo de sortie résultant de l'unité de transformation de couleur (521).

7. Unité de conversion (501) selon la revendication 1, dans laquelle l'unité de sélection de primaire (511) est conçue pour recevoir ladite nouvelle couleur primaire (IP) à partir d'un réseau (515).

8. Unité de conversion (501) selon la revendication 1, dans laquelle l'unité de sélection de primaire (511) est conçue pour sélectionner ladite nouvelle couleur primaire (IP) sur la base d'une maximisation de la plus grande valeur de la coordonnée de la couleur pour cette nouvelle couleur primaire (IP) sur un ensemble de pixels pris dans ladite région de l'image.

9. Unité de conversion (501) selon la revendication 8, dans laquelle l'unité de sélection de primaire (511) est conçue pour éliminer certains pixels pris dans ladite région de l'image qui ne sont pas reproductibles avec ladite nouvelle couleur primaire (IP) de la maximisation, en particulier si un corrélat de luminance des pixels a une faible valeur.

10. Unité de conversion (501) selon la revendication 1, dans laquelle l'unité de transformation de couleur (521) est conçue pour maximiser une partie de l'énergie de l'image affectée à ladite nouvelle couleur primaire (IP), au moins dans ladite région de l'image.

11. Unité de conversion (501) selon la revendication 1, dans laquelle l'unité de conversion comprend une unité de segmentation (572) pour pré-segmenter une image en régions de différentes couleurs.

12. Ecran couleur, qui est capable de changer sur-le-champ ses primaires, comprenant :

- une unité d'écran couleur temporelle (550), et
- une unité de conversion (501) selon l'une quelconque des revendications précédentes, dont une sortie (535) permettant de fournir le signal de sortie (Vout) est reliée à une entrée (561) de l'unité d'écran couleur temporelle (550), dans lequel, en fonctionnement, un laps de temps est associé à la nouvelle couleur primaire.

13. Procédé de traitement d'un signal vidéo d'entrée (Vin) pour fournir un signal vidéo de sortie (Vout) présentant une rupture de couleur moindre lorsqu'il est affiché sur un écran couleur temporelle que le signal vidéo d'entrée, l'écran couleur étant capable de changer sur-le-champ ses primaires, le procédé comprenant les étapes consistant à :

   - entrer un signal vidéo couleur temporelle avec un certain nombre de couleurs primaires ;
   - calculer au moins une nouvelle couleur primaire (IP) dépendant du contenu de l'image pour optimiser une énergie de l'image affectée à la nouvelle couleur primaire pendant son laps de temps, dans au moins une région de l'image du signal vidéo d'entrée (Vin) ; et
   - transformer la couleur du signal vidéo d'entrée en signal vidéo de sortie représenté dans un espace de couleur comprenant ladite nouvelle couleur primaire (IP), au moins dans ladite région de l'image.

14. Procédé de traitement d'un signal vidéo d'entrée (Vin) selon la revendication 13, dans lequel le calcul de ladite nouvelle couleur primaire (IP) est réalisé sur la base d'une statistique des couleurs de l'élément d'image présentes au moins dans ladite région de l'image.

15. Procédé de traitement d'un signal vidéo d'entrée (Vin) selon la revendication 13 ou 14 comprenant une autre étape consistant à transmettre comme une unité d'information (581), ladite nouvelle couleur primaire (IP) via un réseau (515).

16. Produit de programme informatique comprenant un code lisible par le processeur pour permettre à un processeur d'exécuter le procédé selon la revendication 13 ou 14, le code lisible par le processeur comprenant :

   - un code pour calculer au moins une nouvelle couleur primaire (IP) dépendant du contenu de l'image pour optimiser une énergie de l'image affectée à la nouvelle couleur primaire pendant son laps de temps, dans au moins une région de l'image du signal vidéo d'entrée (Vin) ; et
   - un code pour transformer la couleur du signal vidéo d'entrée en signal vidéo de sortie représenté dans un espace de couleur comprenant ladite nouvelle couleur primaire (IP), au moins dans ladite région de l'image.

FIG.1

FIG.2

FIG.3a

FIG.3b

FIG.4

FIG.5

EP 1 869 875 B1

FIG.6

23

FIG.7a

FIG.7b

FIG.8

EP 1 869 875 B1

FIG.9a

FIG.9b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1227687 A
- US 20040100589 A
- WO 02099557 A
- WO 9742770 A